# EUROPEAN PATENT APPLICATION

(11) **EP 2 051 169 A1**
(43) Date of publication of application: **22.04.2009**
(21) Application number: 07020534.9
(22) Date of filing: 19.10.2007
(51) Int. Cl.: G06F 11/34

(54) **Tracing of individual directory access operations**

(71) Applicant: Nokia Siemens Networks Oy, 02610 Espoo (FI)
(72) Inventor: Yang, Guangxin, Beijing (CN); Zhang, Li, Chaoyang District 100102 Beijing (CN)
(74) Representative: Müller, Michael Franz Paul

(57) **Abstract**

The present invention relates to methods, computer program products, an apparatus and a server apparatus of a directory access system for tracing an operation, wherein a directory access protocol message is modified to activate a trace control function. The state of the trace control function is monitored at a component or server (20) of the directory access system and a tracing information which indicates the component or server (20) and how long time the directory access protocol message has been processed at the component or server is added to said directory access protocol message, so that the trace of the directory access protocol message can be recorded.

## Description

### FIELD OF THE INVENTION

The present invention relates to a method, system, apparatus, server apparatus, and computer program products for tracing a directory access operation, such as an access operation according to - but not limited to - the Lightweight Directory Access Protocol (LDAP) for querying and/or modifying directory services.

### BACKGROUND OF THE INVENTION

Telecommunication companies introduced the concept of directory services to information technology and computer networking, as their understanding of directory requirements was well-developed after some 70 years of producing and managing telephone directories. The culmination of this input was the comprehensive X.500 specification, a suite of protocols produced by the International Telecommunication Union (ITU) in the 1980s. X.500 directory services were traditionally accessed via the X.500 Directory Access Protocol (DAP), which required the Open Systems Interconnection (OSI) protocol stack. LDAP was originally intended to be a "lightweight" alternative protocol for accessing X.500 directory services through the simpler (and now widespread) TCP/IP (Transmit Control Protocol / Internet Protocol) protocol stack. Meanwhile, LDAP is the industry standard for accessing directory servers.

A directory is a set of objects with similar attributes organized in a logical and hier-archical manner. The most common example is a telephone directory, which consists of a series of names (either of persons or organizations) organized alphabetically, with each name having an address and phone number attached. Thus, directory servers are playing an increasingly important role in enterprise and communication systems for keeping identity data.

An LDAP directory tree often reflects various political, geographic, and/or organizational boundaries, depending on the model chosen. LDAP deployments today tend to use Domain name system (DNS) names for structuring the topmost levels of the hierarchy. Deeper inside the directory might appear entries representing people, organizational units, printers, documents, groups of people or anything else which represents a given tree entry (or multiple entries).

The current version of LDAP is LDAPv3 which is specified in a series of Internet Engineering Task Force Standard Track Requests for comments (RFCs) as detailed for example in RFC 4510.

In a typical deployment, multiple directory servers may be chained. A directory may also adopt a multiple layered architecture for reliability and scalability reasons. In a mission-critical system, it is often desirable to know how each directory access operation traverses through the network and how long each process phase takes. For example, a system administrator may need to analyze the time information to find out potential bottleneck in the system for tuning or monitoring purposes. The directory server developers themselves may need this kind of feature to debug and optimize the system. Unfortunately, existing testing tools can not generate this kind of information for individual directory access operations.

### SUMMARY

It is therefore an object of the present invention to provide a method and access system for flexible tracing of individual directory access operations.

This object is achieved by a method for tracing an operation in a directory access system, said method comprising:
monitoring a state of trace control function at a server of said directory access system; and
adding to a directory access protocol message tracing information which indicates said server and how long time said directory access protocol message has been processed at said server, when the state of the trace control function is detected to be activated.

Moreover, the above object is achieved by a method for tracing an operation in a directory access system, said method comprising:
determining at an apparatus a state of trace control function; and
extracting from a received directory access protocol message tracing information which indicates at least one server of said directory access system and how long time said received directory access protocol message has been processed at said server, when the state of the trace control function is determined to be activated.

Additionally, the above object is achieved by an apparatus for a directory access system, said apparatus comprising trace control means for controlling trace control function and for deriving from a received directory access protocol message tracing information which indicates how long time said directory control message has been processed at at least one server of said directory access system when said trace control function is activated.

Moreover, the above object is achieved by a server apparatus for a directory access system, said apparatus comprising trace control means for monitoring a state of trace control function, and for adding to a received directory access protocol message tracing information which indicates said server apparatus and how long time said directory control message has been processed at said server apparatus; when the state of the trace control function is determined to be activated.

Further, the above object is achieved by a directory access system comprising at least one apparatus as defined above, and at least one server apparatus as defined above.

In addition, the above object is achieved by respective computer program products comprising code means for producing the steps of the above methods when run on a computer device.

Accordingly, a record (so-called "trace") of nodes through which a directory access request travels and how long it stays on these nodes can be generated. A client apparatus attaches a tracing information (e.g. special flag) to the access request to be sent. Each network directory component that supports this trace control functionality can append a tracing information, such as its IP address and some time information for that request, to a normal response or forwarded request it generates in response to a received request. Clients can use the tracing information in a way they prefer.

Hence, a trace mechanism can be provided for tracing the response time of access requests and/or responses consumed in each directory server in multilevel database server case. The trace function or mechanism can be easily turned on and turned off by setting the tracing flag at the client side. The trace function or mechanism can also be based on an independent process in each component which is fully compatible with the original directory server. The network transfer time can also be calculated if the client and all the servers share the same network time protocol (NTP) server.

The proposed solution can be flexibly implemented either inside or outside of a directory server. When implemented outside, no change to an existing directory server is required. Furthermore, the proposed solution can be based on an extension of the standard mechanism, e.g., an LDAP standard mechanism. As a result, it can be implemented without any modification to the protocol itself.

Additionally, the proposed solution does not require running any third-party software, like Ethereal, in directory access components or server devices to capture the packet in every directory server and to calculate the time consumed at each directory server. Moreover, no manual efforts are required to correlate and analyze the collected data.

The tracing information may indicate an identification of the component or server apparatus, and reception and transmission times of the directory access protocol message at the component or server apparatus. More specifically, the identification may be an IP address, node ID or at least one predefined number that identifies the server or directory component.

In addition, the state of the trace control function may be indicated by introducing a modification to the directory access protocol message, e.g., by setting a predetermined or predefined flag or field in the directory access protocol message. In a specific example, the predetermined or predefined field or flag may be adapted to specify a control type in a control field of an envelope of the directory access protocol message

Further advantageous modifications or developments are defined in the dependent claims.

### BRIEF DESCRIPTION OF THE DRAWINGS

The present invention will now be described on the basis of an embodiment with reference to the accompanying drawings in which:
Fig. 1 shows a schematic block diagram of a directory access system in which the present invention can be implemented;
Fig. 2 shows a signaling diagram of an exemplary trace mechanism according to the embodiment;
Fig. 3 shows a time table which relates to the exemplary trace mechanism of Fig. 2;
Fig. 4 shows a schematic block diagram of a client apparatus according to the embodiment;
Fig. 5 shows a schematic block diagram of a server apparatus according to the embodiment;
Fig. 6 shows a flow diagram of a client-related trace control operation according to the embodiment;
Figs. 7 shows a flow diagram of a server-related trace control operation according to the embodiment; and
Fig. 8 shows a schematic block diagram of a software-based implementation of the embodiment.

### DESCRIPTION OF THE EMBODIMENT

The embodiment will now be described based on an LDAP client-server system. However, it will be apparent from the following description and is therefore explicitly stressed that the present invention can be applied to any other directory access technology which involves individual directory access operations.

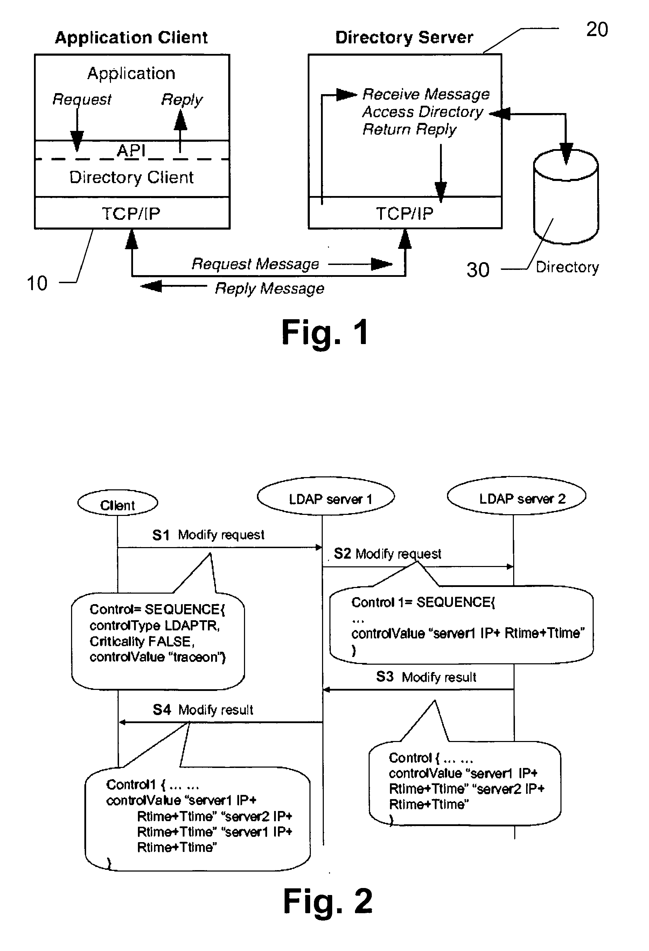

Fig. 1 shows a schematic block diagram of an LDAP system according to the embodiment, which comprises at least one application client 10, at least one LDAP server 20 (or more general: "directory server"), and at least one directory 30. An application running on the client 10 issues requests to and receives replies from the directory server 20 via an application programming interface (API) to a directory client, while request messages and response messages are exchanged by using the TCP/IP protocol. Based on a received message, the directory server 20 accesses the directory 30 and returns a reply message to the client 20. As already mentioned initially, the request and response messages may be routed or forwarded through several server devices or LDAP components (not shown in Fig. 1).

The client 10 starts an LDAP session by connecting to the LDAP server 20, by default on a specific TCP port. The client 10 then sends an operation requests to the LDAP server 20, and the LDAP server 20 sends responses in turn. With some exceptions the client 10 need not wait for a response before sending the next request, and the LDAP server 20 may send the responses in any order.

The client 10 may request operations such as optional protection of the connection (to have a more secure connection), binding (to authenticate and specify the LDAP protocol version), searching for and/or retrieve directory entries, comparing (to test if a named entry contains a given attribute value), adding a new directory entry; deleting a directory entry, modifying a directory entry, moving or renaming a directory entry, aborting a previous request, generic operations used to define other operations, or unbinding (to close a connection).

Additionally, the client 10 may give each request a positive message identification (ID), and the server response has the same message ID. The reply or response may include a numeric result code which indicates success, some error condition or some other special cases. Before the reply, the LDAP server 20 may send other messages with other result data - for example each entry found by a search operation may be returned in such a message.

According to the embodiment, tracing information is provided in the LDAP message or message envelope to provide and save time information consumed in each LDAP server. It may be stored in corresponding control field. This control field can be included in all or only a specific selection of LDAP messages, e.g., as part of or in addition to the control fields already provided in conventional LDA messages defined for example in section 4.1.12 of the LDAPv3 specification. The structure of this tracing information may be as follows:
*TraceControl::= SEQUENCE {*
*controlType LDAPTR,*
*criticality FALSE,*
*controlValue timeinfoControlValue OPTIONAL}*
*timeinfoControlValue::= SEQUENCE of SEQUENCE{*
*IP OCTECT STRING*
*RTime OCTET STORING*
*TTime OCTET STRING*
*}*

In the above example, "LDAPTR" is a notational convenience to indicate that the permitted value of this control type string is a (UTF-8 encoded) dotted-decimal representation of an object identifier. The indication "FALSE" in the criticality field means that if the LDAP server 20 recognizes the control type and is appropriate for the operation, the LDAP server 20 will make use of the tracing information and include this control field in its response message. Otherwise, if the tracing information is unrecognized or inappropriate, the LDAP server 20 ignores the control. A "TimeinfoControlValue" field is provided as a string which consists of groups of "server IP+Rtime+Ttime ", where "server IP" is the IP address of the LDAP server 20, "Rtime" is the receiving time of that packet at the LDAP server 20, and "Ttime" is the sending time of that packet from the LDAP server 20. For the first packet sent by client 10, the tracing information can be empty to indicate that this request should be traced.

Generally speaking, it is suggested to add a special part in the LDAP request and response to indicate the time it spends in each LDAP server. When the client 10 gets the final response packet, it can thus derive all time information from the packet.

Fig. 2 shows a signaling diagram of an exemplary trace mechanism according to the embodiment. The exemplary scenario of Fig. 2 relates to a Modify request as an example of an LDAP request, which is used to modify a content of a directory 30. In step S1, a client sends the Modify request with a control field which indicates that this operation should be traced. An LDAP server 1 receives the request, and parses the packet. It detects that this request needs to be processed by another LDAP server, e.g. an LDAP server 2. Then, it forwards this request to the LDAP server 2 in step S2. The LDAP server 1 has however added its IP address and times of receiving (Rx) and sending (Tx) the packet into the message before sending it out. The LDAP server 2 receives the request and processes it. Additionally, the LDAP server 2 detects the control field and thus adds its IP address and times of receiving and sending the packet into the reply (i.e. Modify result) before sending out it in step S3. The LDAP server 1 receives the reply and forwards it back in step S4 to the client with its IP address and time of receiving and sending the packet in the message. The client received the final response. It now can derive all time consumed in each LDAP server by subtracting the parameters "Ttime" from "Rtime". The network transfer time can also be calculated if the client and all the servers share the same network time protocol (NTP) server.

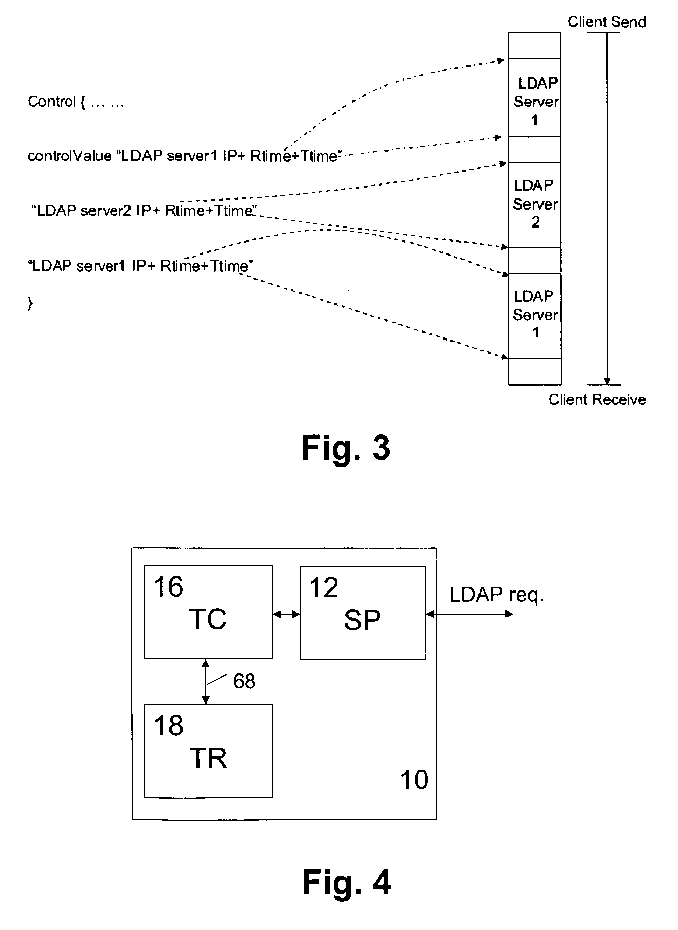

Fig. 3 shows a time table which relates to the exemplary trace mechanism of Fig. 2. Based on the individual control values "Rtime" and "Ttime" and the respective server's IP address added at each LDAP server, the time consumed at each server can be allocated and accumulated for each LDAP server. The time table of Fig. 3 is shown as a bar whose top corresponds to the sending time of the concerned request at the client and whose bottom corresponds to the receiving time of the related reply or result at the client. As can be gathered from Fig. 3, the gaps between the individual times consumed at the LDAP servers 1 and 2 correspond to the times required for sending the messages from the sending component to the receiving component.

The LDAPTR trace control should be supported by the LDAP servers so that the trace function can work. If one of the servers doesn't support the LDAPTR control, it will just ignore the control. The request will be processed as usual. The response will not contain the trace information generated by that server.

In the above example, a two-level database system with two LDAP servers 1 and 2 was described. However, the proposed mechanism can be implemented in a multilevel LDAP database system as well, which has not only two levels but also more levels (LDAP servers). The functionality is then similar to the two-level example of Fig. 2 and does not need to be explained in detail.

Processing trace control can either be integrated with the LDAP server process, or run as an independent process. In the first case, the original LDAP server process needs to be changed to support the proposed trace control. In the latter case, the original or conventional LDAP server process does not need to be changed, and another process may be started instead in each LDAP component to deal with the trace control.

Fig. 4 shows a schematic block diagram of a client apparatus, such as the client 10 of Fig. 1, according to the embodiment. A signal processing functionality or unit (SP) 12 is provided for receiving, processing and transmitting LDAP messages from LDAP servers, such as the LDAP server 20 of Fig. 11. Received messages for which the modification of activated trace control has been detected at the signal processing unit 12 are supplied to a trace control functionality or unit (TC) 16, where the tracing information 68 (e.g. IP addresses, Rx times and Tx times at the LDAP servers) added to the LDAP messages is detected and extracted to be stored in a trace memory or archive (TR) 18, from where it can be read out by the trace control unit 16 for analyzing or evaluation purposes. When a new LDAP request to be traced is generated at the trace control unit 16, it sets the corresponding control field or flag in the message to activate the trace mechanism at the LDAP servers through which the message is routed or forwarded.

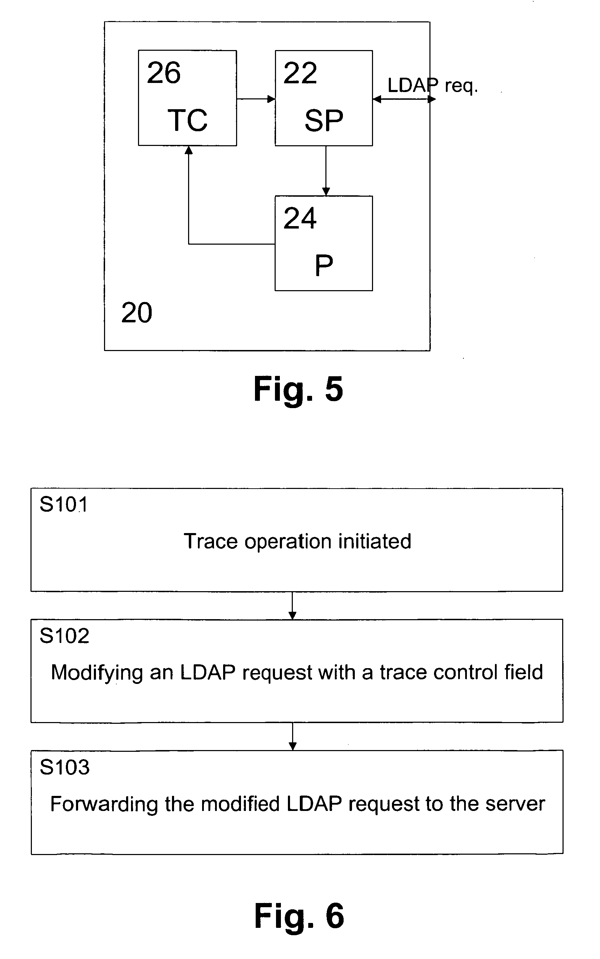

Fig. 5 shows a schematic block diagram of a server apparatus, such as the LDAP server 20 of Fig. 1, according to the embodiment. A signal processing functionality or unit (SP) 22 receives, processes and transmits LDAP messages, which are also supplied to a parsing functionality or unit (P) 24, where the modification (e.g. active trace control field) is detected and a trace control functionality or unit (TC) 26 is initiated to add the tracing information, e.g. Rx time, Tx time and IP address, to the LDAP message before it is forwarded to the intended LDAP server or returned towards the client.

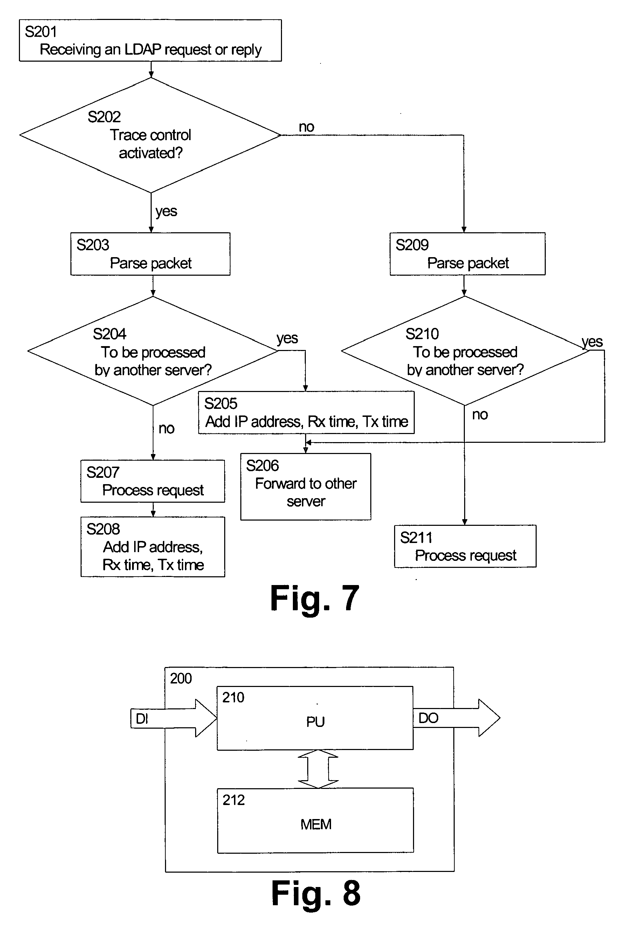

In the following, individual steps of the trace control operations initiated at the client or LDAP server are described with reference to Figs. 6 and 7.

Fig. 6 shows a flow diagram of a client-related trace control initiation operation according to the embodiment. At the client, a trace operation is initiated in step S101. Then, in step S102, an LDAP request is generated with an activated trace control field or flag. This modified LDAP request is thereafter forwarded to the desired LDAP server.

Figs. 7 shows a flow diagram of a server-related trace control operation according to the embodiment. When an LDAP request or reply is received in step S201, it is checked in step S202 whether the trace control filed of the LDAP message is activated, so as to monitor the state of a trace control function. If the trace control function is detected to be activated, the packet is parsed in step S203 and it is checked in step S204 whether the packet is to be processed by another server. If not, the request is processed (or the reply is forwarded) in step S207, and finally in step S208 the tracing information (e.g. IP address, Rx time and Tx time) is added to the LDAP message.

If it is determined in step S202 that trace control is not activated, steps S209 and S210 are performed, which are the same as steps S203 and S204 and thus do not need to be described again.

If it is determined in step S204 that the concerned packet is to be processed by another server, the tracing information (e.g. IP address, Rx time and Tx time) is added to the LDAP message in step S205 and finally the LDAP message is forwarded to the determined other server in step S206.

If it is determined in step S210 that the concerned packet is to be processed by another server, the process continues with step S206, where the LDAP message is forwarded to the determined other server, without prior addition of any tracing information, as trace control is not activated in the LDAP message.

If it is determined in step S210 that the concerned packet is not to be processed by another server, the request is processed (or the reply is forwarded) in step S211 without any addition of the tracing information.

Fig. 8 shows a schematic block diagram of a software-based implementation of the proposed trace mechanism. Here, the client shown in Fig. 4 and/or the receiver shown in Fig. 5 each comprise a processing unit 210, which may be any processor or computer device with a control unit which performs control based on software routines of a control program stored in a memory 212. Program code instructions are fetched from the memory 212 and are loaded to the control unit of the processing unit 210 in order to perform the processing steps of the above functionalities described in connection with the respective Figs. 6 and 7 or with the respective blocks 12 and 16 of Fig. 4 or blocks 22, 24 and 26 of Fig. 5. These processing steps may be performed on the basis of input data DI and may generate output data DO, wherein at the client the input data DI may correspond to a trace initiation information and the output data DO may correspond to a control signal for activating the trace control field or flag or to the LDAP message with the activated trace control field or flag. On the other hand, at the LDAP server, the input data may correspond to a received LDAP message and the output data may correspond to the modified LDAP message with the added tracing information.

At this point, it is noted that the functionalities of blocks 12 and 16 of Fig. 4 as well as blocks 22, 24 and 26 of Fig. 5 can be implemented as discrete hardware or signal processing units, or alternatively as software routines or programs controlling a processor or computer device to perform the processing steps of the above functionalities.

To summarize, methods, an apparatus and a server apparatus of a directory access system for tracing an operation have been described, wherein a directory access protocol message is modified to activate a trace control function. The state of the trace control function is monitored at a component or serverof the directory access system and a tracing information which indicates the component and how long time the directory access protocol message has been processed at the component or server is added to said directory access protocol message, so that the trace of the modified directory access protocol message can be recorded.

It is to be noted that the present invention is not restricted to the LDAP-based embodiment described above, but can be implemented in any directory access system involving individual access messages. The tracing information may as well comprise any other server identification and/or any other information indicating the processing time of a message within the concerned server or directory component. Moreover, the message may be modified in various alternative ways (e.g. modifying its length, structure, content, etc.) to indicate a trace control activation. The embodiment may thus vary within the scope of the attached claims.

## Claims

1. A method for tracing an operation in a directory access system, said method comprising:
a. monitoring a state of trace control function at a server(20) of said directory access system; and
b. adding to a directory access protocol message tracing information which indicates said server (20) and how long time said directory access protocol message has been processed at said server ,when the state of the trace control function is detected to be activated.

2. The method according to claim 1, wherein said tracing information indicates an identification of said server (20), and a time of receiving and transmitting said directory access protocol message at said server.

3. The method according to claim 2, wherein said identification is an IP address, a node ID, or at least one predefined number that identifies said server (20).

4. The method according to any one of the preceding claims, wherein said state of the trace control function is indicated by a predefined flag or field set in said directory access protocol message.

5. The method according to claim 4, wherein said predefined field or flag is adapted to specify a control type in a control field of an envelope of said directory access protocol message.

6. The method according to any one of the preceding claims, wherein said directory access protocol message is a Lightweight Directory Access Protocol message.

7. A method for tracing an operation in a directory access system, said method comprising:
a. determining at an apparatus (10) a state of trace control function; and
b. extracting from a received directory access protocol message tracing information which indicates at least one server (20) of said directory access system and how long time said received directory access protocol message has been processed at said server (20), when the state of the trace control function is determined to be activated.

8. The method according to claim 7, wherein said tracing information indicates an identification of said server and a time of receiving and transmitting said directory access protocol message at said server (20).

9. The method according to claim 8, wherein said identification is an IP address, a node ID, or at least one predefined number that identifies said component (20).

10. The method according to any one of claims 7 to 9, wherein said state of the trace control function is indicated by a predefined flag or field set in said directory access protocol message.

11. The method according to claim 10, wherein said predefined field or flag is adapted to specify a control type in a control field of an envelope of said directory access protocol message.

12. The method according to any one of claims 7 to 11, wherein said directory access protocol message is a Lightweight Directory Access Protocol message.

13. An apparatus for a directory access system, said apparatus comprising trace control means (16) for controlling trace control function and for deriving from a received directory access protocol message tracing information which indicates how long time said directory control message has been processed at at least one server of said directory access system when said trace control function is activated.

14. The apparatus according to claim 13, wherein said trace control means is adapted to derive from said tracing information an identification of said server (20), a time of receiving and transmitting said directory access protocol message at said server (20), and a period of time said directory control message has been processed at said server (20) by subtracting the time of transmitting from the time of receiving.

15. The apparatus according to claim 14, wherein said trace control means (16) is adapted to derive said identification as an IP address, a node ID, or at least one predefined number that identifies said server (20).

16. The apparatus according to any one of claims 13 to 15, wherein said trace control means (16) is adapted to control said trace control function by setting a predefined flag or field in a directory access protocol message.

17. The apparatus according to claim 16, wherein said predefined field or flag is adapted to specify a control type in a control field of an envelope of said directory access protocol message.

18. The apparatus according to any one of claims 13 to 17, wherein said directory access protocol message is a Lightweight Directory Access Protocol message.

19. A server apparatus for a directory access system, said apparatus comprising trace control means (26) for monitoring a state of the trace control function, and for adding to a received directory access protocol message tracing information which indicates said server apparatus and how long time said directory control message has been processed at said server apparatus, when the state of the trace control function is detected to be activated..

20. The apparatus according to claim 19, wherein said trace control means (26) is adapted to add as said tracing information an identification of said apparatus (20), and a time of receiving and transmitting said directory access protocol message at said apparatus (20).

21. The apparatus according to claim 20, wherein said trace control means (26) is adapted to add an IP address as said identification.

22. The apparatus according to any one of claims 19 to 21, wherein said trace control means is adapted to detect said state of the trace control function by detecting a predefined flag or field in said directory access protocol message.

23. The apparatus according to claim 22, wherein said pre-defined field or flag is adapted to specify a control type in a control field of an envelope of said directory access protocol message.

24. The apparatus according to any one of claims 19 to 23, wherein said directory access protocol message is a Lightweight Directory Access Protocol message.

25. A directory access system comprising at least one apparatus according to claim 13, and at least one server apparatus according to claim 19.

26. A computer program product comprising code means for producing the method of claim 1 when running on a server computer device of a directory access system.

27. A computer program product comprising code means for producing the method of claim 7 when running on a client computer device of a directory access system.
